# EUROPEAN PATENT APPLICATION

(11) **EP 3 404 456 A1**
(43) Date of publication of application: **21.11.2018**
(21) Application number: 18164143.2
(22) Date of filing: 27.03.2018
(51) Int. Cl.: G02B 6/32, G02B 6/38

(54) **OPTICAL ELEMENT AND OPTICAL CONNECTOR**

(30) Priority: 17.05.2017 JP 2017097972
(71) Applicant: KONICA MINOLTA, INC., Tokyo 100-7015 (JP)
(72) Inventor: WADA, Kazuhiro, Tokyo, 100-7015 (JP)
(74) Representative: Gille Hrabal

(57) **Abstract**

The present invention provides an optical element which can be fabricated in high accuracy and with low price, as well as an optical connector using the optical element. An optical element is connected to a ferrule that holds an optical fiber, which includes a plurality of lenses, and at least one cutout that engages with a projection part formed on the ferrule. The lens is positioned relative to the optical fiber held in the ferrule by an engagement of the projection part and the cutout.

## Description

### Technical Field

The present invention relates to an optical element and optical a connector which are suitably used, for example, for an optical communications etc.

### Background Art

In various information/signal processing equipment including a network apparatus such as a router, a server, and a host computer, an information/signal processing is under a process of large-scaling and improved in a speed. In these equipment, signals has been conventionally transmitted by electric wirings between CPUs and memories on circuit substrates (boards), between wiring substrates, and between apparatuses (racks). However, such signal transmission is not sufficient from viewpoints of a transmission speed, a data transmission capacity, a power consumption, a radius from a transmission path, and an interference of an electromagnetic wave to the transmission path. In view of this, instead of above mentioned electric wiring, so-called optical interconnection is actually beginning to be introduced, which is excellent in the above-mentioned viewpoints, and which transmits the signal by light using an optical fiber etc. as the transmission path. In the optical interconnection, an optical connector is conventionally used to optically combine the optical fibers. The typical optical connector has a lens which condenses the light emitted from an end of one optical fiber to an end of other optical fiber.

By the way, in recent years, an amount of the optical communication information rapidly increases, and a long-distance and a high-speed transmission of the information are additionally desired. However, a multimode fiber conventionally used adopts an optical fiber having core diameters of 50 µm and 62.5 µm. As the multimode fiber transmits a light signal in plural modes, there is a problem of a shift between the attainment times of the signals, which results in generation of a mode distribution. Thus, due to a data loss caused by the mode distribution, the multimode fiber is considered as unsuitable for the long-distance and high-speed transmission.

On the other hand, a single mode fiber is an optical fiber which has an extremely fine diameter of which mode field diameter is about 9 µm, and it has an advantage capable of suppressing attenuation as much as possible by spreading a light signal in the one mode. Accordingly, the single mode fiber has been often used, which, unlike the transmission method using many modes such as the multimode fiber, has the single attainment time of signal which, thanks to no generation of a mode loss, is suitable for the long-distance and high-speed transmission. However, in some cases, the multimode fiber may still be used.

In the typical optical connector, multicores optical fiber bodies composed of plural cores bundled are often joined, for the purpose of increasing the information amount. The optical connector used for such application typically has a holding member, and an optical element. The holding member holds the multicores optical fiber body which is called as a ferrule. The optical element is arranged between a pair of ferrules, and is composed of plural lenses for spreading light effectively between plural core ends held in the ferrule. Here, for the upmost suppression of the transfer loss of the light signal, an optical axis of the lens is preferably coincided with the center of the optical fiber in high accuracy. For this reason, a measure is important which improves a manufacturing accuracy of the optical element with reduced cost.

However, for provision of the optical element in high accuracy and with low price, the manufacture technique using a metallic molding can be selected. The typical metallic molding, giving priority to the cost, often uses resin as a raw material. In addition, if the technology of the patent documents 1 can be diverted to create an optical element with resin containing the glass fiber for example, an optical element can be provided of which thermal expansion is less affected by change of an environmental temperature. Alternatively, if the optical element is molded from glass for example, it can exhibit the optical nature stable for the change of environmental temperature.

### Citation List

### Patent Literature

PTL 1: Japanese Patent Laid-open No. 2016-133518

### Summary of the Invention

### Technical Problem

By the way, when metallic molding the optical element, the subject exists that how molds a positioning structure between the optical element and the ferrule. For example, a round shaft planted to the ferrule is fitted into a fitting hole formed in the optical element. Such fitting preferably allows the optical axis of the lens to coincide with the center of the optical fiber, without difficulty and in high accuracy. However, metal molding the fitting hole which has a comparatively long axis length for securing the fabricating accuracy is difficult from an aspect of the molding technique. Furthermore, when the optical element is molded by an injection molding, a weld line may be formed near the fitting hole, which may reduce a positional accuracy and environment-proof nature. On the other hand, a heat and cool molding can also be performed for example as the measure against the weld line, but it increases the cost. On the other hand, the fitting hole can be formed on the molded product by a machining, but it increases the number of processes thereby increasing the cost. The problem occurred in forming such fitting hole often becomes remarkable especially when the optical element is molded using the glass.

The present invention is made in view of the above mentioned problem, and has an object to provide the optical element which can be fabricated in high accuracy and with low price, as well as an optical connector using the optical element.

In order to realize at least one of the above-mentioned object, an optical element reflecting one aspect of the present invention is connected to a ferrule to hold an optical fiber, which includes a plurality of lenses, and at least one cutout engaging with a projection part formed on the ferrule, wherein the lens is positioned relative to the optical fiber held in the ferrule by an engagement of the projection part and the cutout.

According to the present invention, the optical element which can be fabricated in high accuracy and with low price, as well as the optical connector using the optical element are provided.

### Brief Description of the Drawings

[Fig. 1] Fig. 1 a perspective view of an optical connector according to the first embodiment.
[Fig. 2] Fig. 2 is an exploded view of the optical connector.
[Fig. 3] Fig. 3 is a sectional view of a pair of optical connectors connected using a coupler, taken along a vertical plane passing a line III-III, and viewed along arrow in Fig. 1.
[Fig. 4]Fig. 4 is a view showing molding steps of the lens plate 30.
[Fig. 5] Fig. 5 is a perspective view of a lower mold viewed from an upper face.
[Fig. 6] Fig. 6 is a front view of a lens plate 30' according to a modification.
[Fig.7] Fig. 7 is an exploded view of an optical connector according to the second embodiment.
[Fig. 8] Fig. 8 is a view of a lens plate 130 used for the optical connector 120 according to the second embodiment, viewed from arrow VIII in Fig. 7.
[Fig. 9] Fig. 9 is a view of the lens plate 130 viewed from arrow IX in Fig. 7.
[Fig. 10] Fig. 10 is a view showing a reheat molding step of the lens plate 130.

### Description of Embodiment

### (First Embodiment)

Hereinafter, embodiments of the present invention will be explained with referenced to drawing.

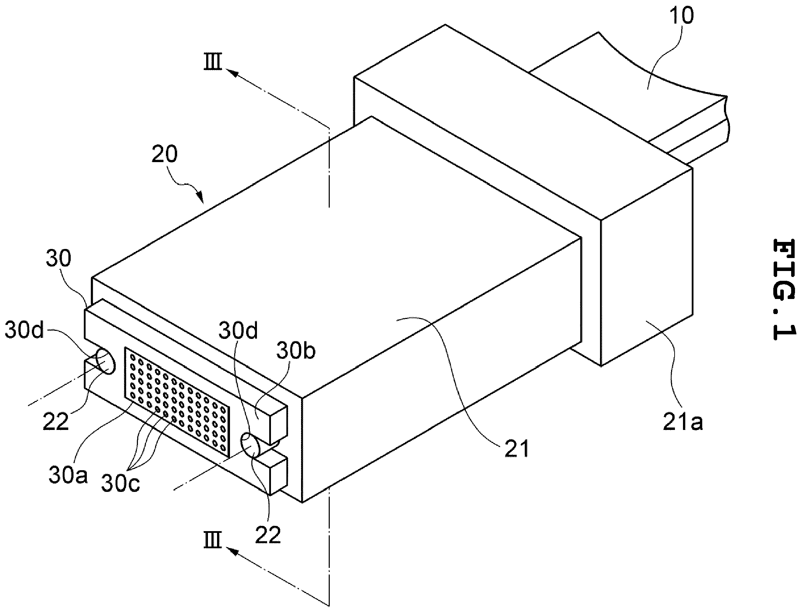

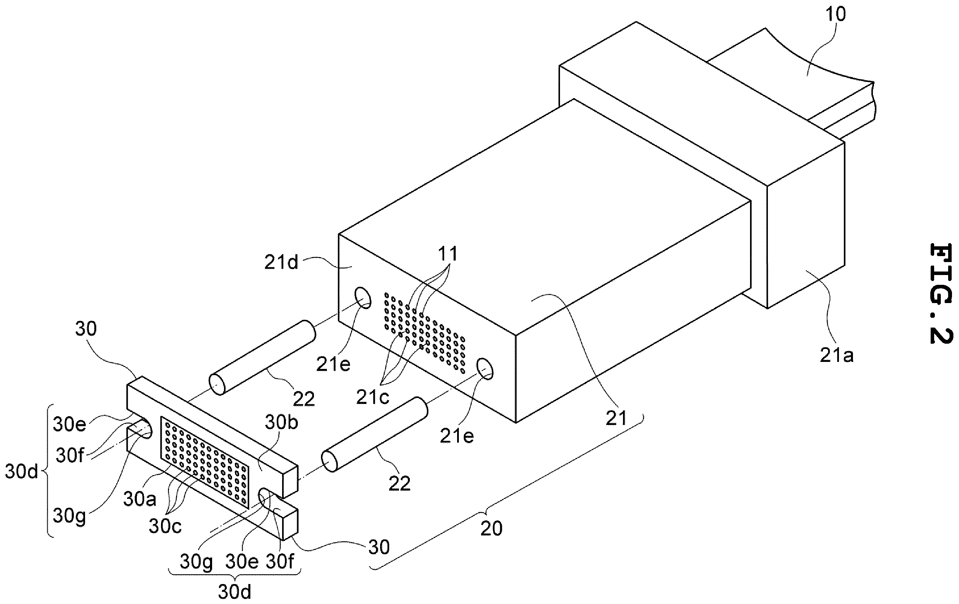

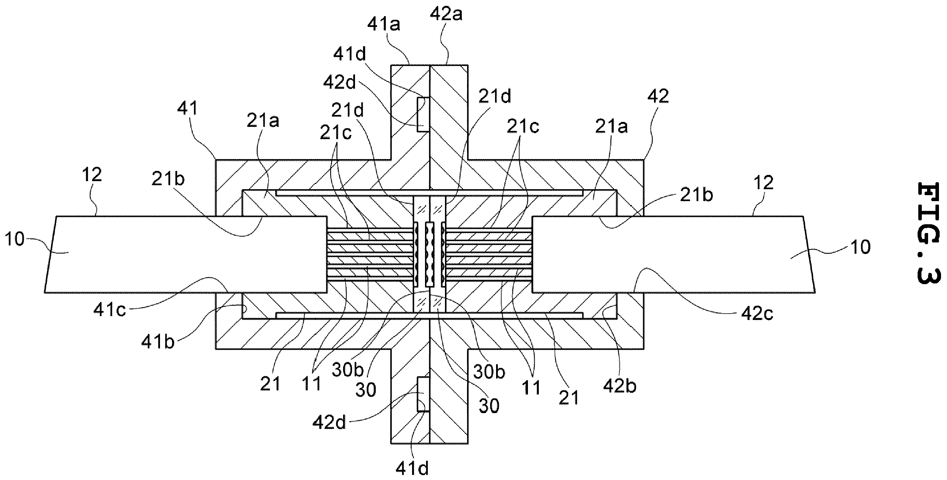

Fig. 1 a perspective view of an optical connector according to the first embodiment. Fig. 2 is an exploded view of the optical connector. Fig. 3 is a sectional view of a pair of optical connectors connected using a coupler, taken along a vertical plane passing a line III-III, and viewed along arrow in Fig. 1. A pair of optical connectors 20 are connected by abutment, and transmit a light signal between the optical cables 10.

In Fig. 1, the optical connector 20 is composed of an optical cable 10 having many cores (here, sixty cores) connected, and it has a ferrule 21 and a lens plate 30 which is the optical element. The ferrule 21 made of a thermosetting resin containing the glass fibers is shaped into approximately a rectangular parallelepiped, and it has an enlarged part 21a at an end where the optical cable 10 is connected. The optical cable 10 has sixty optical fibers 11 composed of cores and clads, and a covering part 12 protecting the optical fiber 11 (refer to Fig. 3).

As shown in Fig. 3, each enlarged part 21a is provided with, at an inner part thereof, an end hole 21b to which the end of the optical cable 10 is inserted. Plural penetration holes 21c are formed to extend from a bottom of the end hole 21b in a longitudinal direction of the ferrule 21, and the optical fibers 11 extended from an interior of the optical cable 10 are held in this penetration hole 21c. The optical fiber 11 is for a single mode (or for multimode), and as shown in Fig. 2, it has a tip exposed on an end face 21d opposite to the enlarged part 21a.

In Fig. 2, circular openings 21e are formed at both sides in the horizontal direction of a group of the penetration holes 21c where the tips of the optical fibers 11 are exposed. Round shafts (projection part) 22 are inserted in the circular openings 21e in parallel each other, and each round shaft 22 has a tip projected from the end face 21d.

In Fig. 2, the lens plate 30 of a rectangle plate shape has a rectangular concave parts 30a recessed in centers of a front face and a back face, and an abut face 30b formed around the concave part 30a. In each concave part 30a, lens faces 30c are formed with five lines and twelve rows arrangement, and the opposing lens faces 30c on the front face and back face have biconvex shapes of which optical axes are coincided to constitute the lens. A cutout having a U shape, when viewed in the optical axis direction, is formed on the lens plate 30 in the middle of respective both sides. The cutout 30d has an upper wall 30e and a lower wall 30f extending in parallel toward the concave part 30a, and a half cylinder face 30g connecting the upper wall 30e and the lower wall 30f. An inner diameter of the half cylinder faces 30g is selected equal to an outer diameter of the round shaft 22.

An antireflection film is formed in each concave part 30a located in the centers of the front face and the back face of the lens plate 30, and a part of the abut face 30b located therearound. The antireflection film provided in such area brings about an advantage, that is, even if the antireflection film is peeled, its progress stops at the edge position of the concave part 30a, and is prevented from influencing to the lens face 30c. However, the antireflection film is preferably formed avoiding the cutout 31d. This is because the antireflection film, formed on the cutout 30d during insertion of the round shaft 22 thereinto, may be peeled off and worsen a positional accuracy.

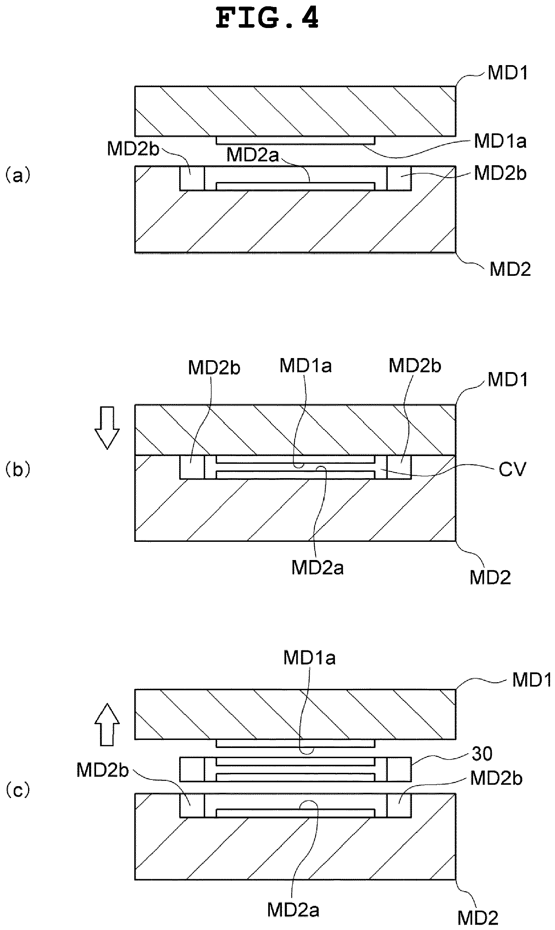

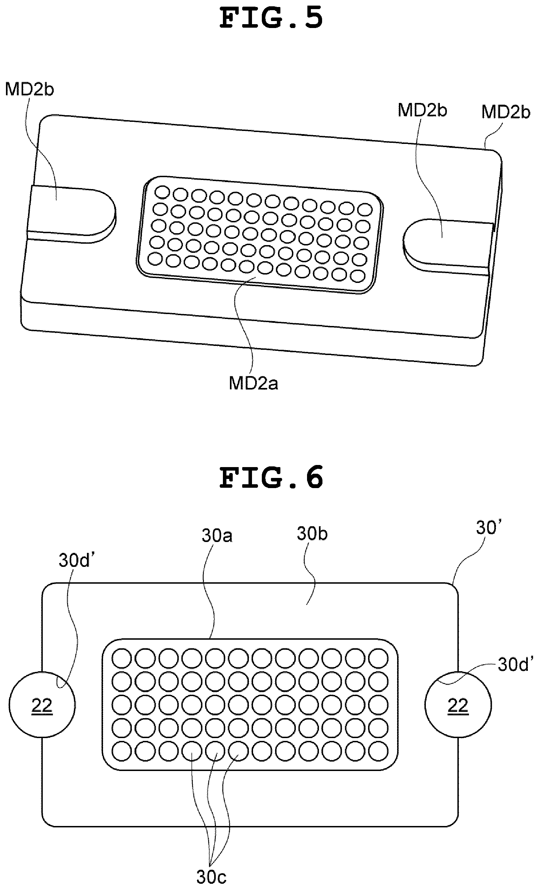

Next, molding steps of the lens plate 30 will be explained. Fig. 4 shows the molding step of the lens plate 30, with omitting lens and lens transferring face. Fig. 5 is a perspective view showing the lower mold from the upper face. In Fig. 4 (a), an upper mold MD1 has an optical face transferring face MD1a corresponding to one concave part 30a and one lens face 30c. On the other hand, as shown in Fig. 5, a lower mold MD2 has an optical face transferring face MD2a corresponding to other concave part 30a and other lens face 30c, and a cutout molding face MD2b corresponding to the cutout 30d. The optical face transferring face MD2a and the cutout molding face MD2b are simultaneously formed by machining on the single lower mold MD2, so that the positional relation between the lens face 30c and the cutout 30d to be transferred and molded by these faces is determined in high accuracy.

As shown in Fig. 4 (a), with opposing the optical face transferring faces MD1a and MD2a as shown in Fig. 4 (b), the upper mold MD1 is made to approach to the lower mold MD2 to clamp the both molds.

A cavity CV is formed between the lower mold MD2 and the upper mold MD1 clamped. A resin containing a melted glass fiber is filled into this cavity CV from a gate (not shown) and then solidified. During solidification, the cutout molding face MD2b can transfer and mold the cutout in high accuracy.

Then, as shown in Fig. 4 (c), with spanning the lower mold MD2 from the upper mold MD1, the lens plate 30 (refer to Fig. 2), in which the concave part 30a having the lens face 30c and the abut face 30b are molded, is demolded from the both molds. Here, thanks to the excellent demolding nature of the cutout molding face MD2b, the lens plate 30 can be demolded easily, without damaging cutout 30d. Then, an antireflection film is formed in a successive process by a vapor depositing method etc. with masking a circumference of the lens plate 30 including the cutout 30d. The vapor depositing method is omitted in explanation because of its publicity.

Next, a fabrication mode and a joining mode of the optical connector 20 will be explained. Here, as shown in Fig. 2, it is presumed that the end of the optical cable 10 is connected to an end hole 21b of the ferrule 21, and the tip of the optical fiber 11 is exposed on the end face 21d. During fabrication of the optical connector 20, the round shafts 22 are inserted into the circular openings 21e of the ferrule 21, and the protruded end of the round shaft 22 is made to contact with the half cylindrical face 30g of the cutout 30d of the lens plate 30. In this state, one abut face 30b is made to abut end face 21d of the ferrule 21. Here, thanks to each lens face 30c formed in the concave part 30a, the lens face peaks are no danger of interfering with the end face 21d, which results in a predetermined clearance secured therebetween. Furthermore, each lens face 30c is positioned in high accuracy using the middle point between two lines each of which passes through the center of half cylinder faces 30g of a pair of cutout 30d as the standard. Furthermore, the end of the optical fiber 11 held in the penetration hole 21c is also positioned in high accuracy using the middle point between two central lines of a pair of circular openings 21e as a standard. Accordingly, the optical axis of each lens face 30c and an end center of the optical fiber 11 opposed thereto can be coincided in high accuracy. Meanwhile, the interval between a pair of half cylinder faces 30g can be slightly expanded relative to the interval between the two round shafts 22, which allows the round shafts 22 to elastically deform slightly, when the round shafts 22 engage with the half cylinder faces 30g. Here, so-called pull-out force, that is the force necessary to pull out (or push) the lens plate 30 from(into) the round shafts 22, can be set to a predetermined value utilizing face pressures acting between the round shafts 22 and the half cylinder faces 30g.

Furthermore, when joining the optical connectors 20, couplers 41 and 42 shown in Fig. 3 are used. The couplers 41 and 42 are respectively made into an enclosure shape which has one opened end. The couplers 41 and 42 have flange parts 41a and 42a at side of the opened end, and closed ends 41b and 42b provided with derivation holes 41c and 42c at side opposite to the opened end. An engaging concave part 41d is formed on an opposing end face of the flange part 41a, and an engaging convex part 42d is formed on an opposing end face of the flange part 42a, corresponding to the engage concave part 41d.

As shown in Fig. 3, with housing the ferrules 21 inside the couplers 41 and 42 respectively, the optical cables 10 are pulled out externally through the derivation holes 41c and 42c. During pull-out, the enlarged parts 21a of the ferrules 21 engage with inner circumference walls of the closed ends 41b and 42b to position the ferrules 21 relative to the couplers 41 and 42. In this state, the lens plates 30 are exposed on the opening ends of the couplers 41 and 42.

When engaging the convex part 42d of the flange part 42a is engaged with the concave part 41d of the flange part 41a to closely attach the flange parts 41a and 42a, the abut faces 30b of the opposing lens plates 30 are abutted mutually. During abutment, thanks to each lens face 30 formed in the concave part 30a, there is no danger of mutual interfere of the lens face peaks, which results in a predetermined clearance secured therebetween. The engagement of the engage concave part 41d and the engage convex part 42d allows the optical axes of the opposing lens faces 30c to coincide in high accuracy. Thus, a pair of optical connectors 20 are joined in high accuracy through the couplers 41 and 42. A clearance between the circular opening 21e of the ferrule 21 and the round shaft 22 is selected to be equal to or smaller than a clearance between the round shaft 22 and the cutout 30d of the lens plate 30. Furthermore, a clearance between the round shaft 22 and the cutout 30d is selected to be smaller than a clearance of an area where the couplers 41 and 42 and the optical cables 10 are mutually engaged. These dimensional relations are not illustrated clearly.

In Fig. 3, light (for example, having a wavelength of 850 nm, 1310 nm, and 1550 nm) spreads in the optical fibers 11 of one optical cable 10. Then, light is emitted from the end of the ferrule 21, and makes incident into one lens plate 30 in a state of emission light, and is emitted from one lens plate 30 as a collimate light. The emitted collimate light makes incident into the other lens plate 30, and is emitted from the other lens plate 30 as a convergence light. This convergence light condenses at the end of the optical fiber 11 of the other ferrule 21, and is transmitted therefrom through the other optical cable 10. A diameter of the collimate light is expanded to about five times of a core diameter of the single mode optical fiber 11. Thus, even if optical axes are shifted between a pair of lens plates 30, the influence resulted from such shift can be inhibited.

According to this embodiment, the lens plates 30 are metallic molded from the resin containing the glass fibers, which are joined to the ferrules 21 by engaging their cutouts 30d to the round shafts 22. Thus, the lens faces 30c and the optical fibers 11 can be positioned in high accuracy. Meanwhile, the lens plates 30 may be molded of the resin not containing the glass fiber.

Fig. 6 is a front view of a lens plate 30' according to a modification of this embodiment, which shows the lens plate 30' in an engaged state with the round shaft 22. In this modification, as the cutout 30d' is made into a half cylinder shape, that is, as shown in Fig. 6, the cutout 30d' has a semicircular shape, when viewed in the optical axis direction of the lens face 30c. The other structure in the modification is the same as the structure of the embodiment mentioned above.

### (Second Embodiment)

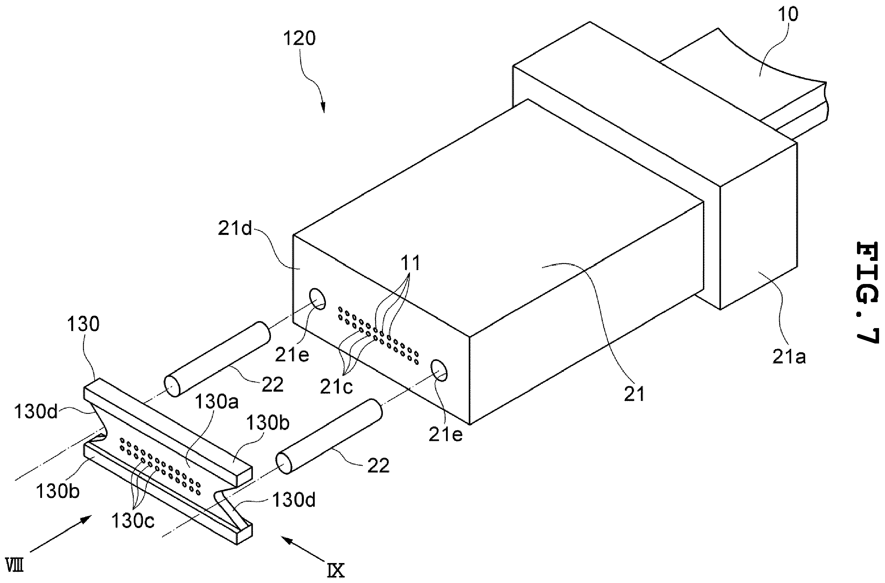

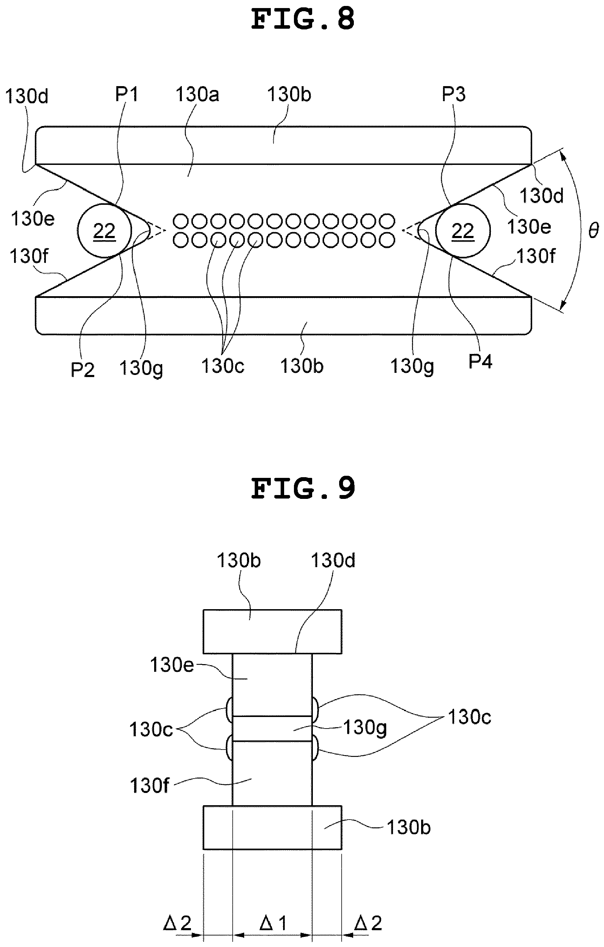

Fig. 7 is an exploded view of an optical connector according to the second embodiment. Fig. 8 is a view of a lens plate 130 used for the optical connector 120 according to the second embodiment, viewed from arrow VIII in Fig. 7. Fig. 9 is a view of the lens plate 130 viewed from arrow IX in Fig. 7. In this embodiment, an optical cable 10, a ferrule 21, and a round shaft 22 are the same as those used in the embodiment mentioned above. On the other hand, the optical cable 10 has twenty-four cores structure, and the penetration holes 21c of the ferrule 21 have two lines and twelve rows arrangement corresponding to the above structure.

A lens plate 130 is made of a glass mold and has a plate shape. The lens plate 130 has a thin plate part 130a, abut parts 130b, and cutouts 130d. The thin plate part 130a has a plate thickness Δ1 (Fig. 9) and includes faces in each of which a lens surface 130c is arranged in an array of two lines and twenty rows. Each abut part 130b is overhung by an overhang amount Δ2 (Fig. 9) from the thin plate part 130a toward the both sides in the optical axis direction. Each cutout 130d having a V shape is formed on each side face of the thin plate part.

In Fig. 8, each cutout 130d has two planes 130e and 130f, and a curved face 130g connecting the planes 130e and 130f. In other words, the cutout 130d has two straight lines extending in a crossing direction, when viewed in the axis direction of the round shaft 22. The planes 130e and 130f are preferably disposed in an open angle θ of 60° ± 20°. Considering inferiority of glass to resin in a molding nature, the lens plate 130 is formed with the cutouts, instead of the holes, to relieve a burden during molding, which contributes to the cost reduction. However, the lens plate 130 may be formed from resin. As shown in Fig. 9, the lens plate 130 has a symmetrical shape about a central face in the thickness direction.

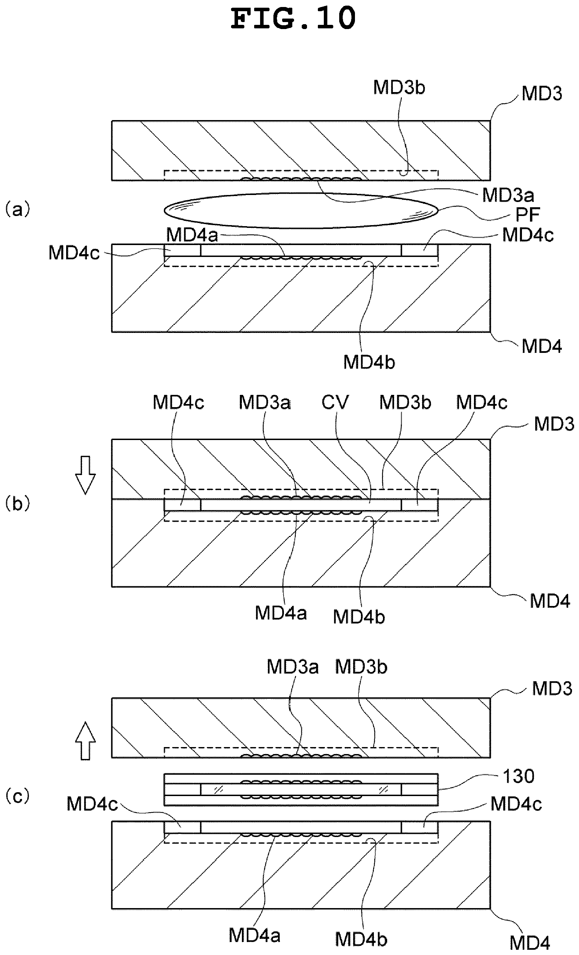

Next, molding steps of the lens plate 130 will be explained. Fig. 10 shows a reheat molding step of the lens plate 130. In Fig. 10 (a), an upper mold MD3 has an optical face transferring face MD3a corresponding to one lens face 130c, and an abut part molding face MD3b molding one abut part 130b. On the other hand, a lower mold MD4 has an optical face transferring face MD4a corresponding to other lens face 130c, an abut part molding face MD4b molding other abut part 130b, and a cutout molding face MD4c corresponding to the V-shaped cutout. The optical face transferring face MD4a and the cutout molding face MD4c are simultaneously formed on the single lower mold MD4 by machining, so that the positional relation between the lens face 130c and the cutout 130d, which are transferred and molded by the above faces, is determined in high accuracy.

As shown in Fig. 10 (a), the optical face transferring faces MD3a and MD4a opposes with intervening a preform PF of glass therebetween. As shown in Fig. 10 (b), during heating the upper mold MD3 and the lower mold MD4, the upper mold MD3 approaches to the lower mold MD4 for clamping the both molds, then the preform PF of glass is cooled for its solidification.

Then, the upper mold MD3 is spanned from the lower mold MD4. Thus, as shown in Fig. 10 (c), the lens plate 130 formed with the lens face 130c and the cutout 130d can be demolded from both molds. Meanwhile, the antireflection film may be formed on the face of the thin plate part 130a including the lens face 130c, which can preferably suppress the loss during communication.

Next, a fabrication mode and a joining mode of the optical connector 120 will be explained. Here, as shown in Fig. 7, it is presumed that the end of the optical cable 10 is connected to an end hole 21b of the ferrule 21, and the tip of the optical fiber 11 is exposed on the end face 21d.

During fabrication of the optical connector 20, the round shafts 22 are inserted into the circular openings 21e of the ferrule 21, and the protruded end of the round shaft 22 is made to contact with the cutout 130d of the lens plate 130.

Specifically, in Fig. 8, a right half outer circumference face of the left round shaft 22 contacts with the plane 130e of the cutout 130d at a point P1, and contacts with planes 130f at a point P2. On the other hand, a left half outer-circumference face of the right round shaft 22 contacts with the plane 130e at a point P3, and contacts with the planes 130f at a point P4. When viewed in the axis direction of the round shaft 22 in fabricated state of the lens plate 130 and the ferrule 21, two straight lines (lines representing the planes 130e and 130f) contact with the outer circumference of the round shaft 22. A crossing point of the extension lines (shown by dotted lines in Fig. 8) of two straight lines are located on a line segment connecting the two centers of the two round shafts 22. Thus, the lens plate 130 is positioned in high accuracy relative to the round shafts 22.

Further, each lens face 130c is positioned in high accuracy using the middle point between the center lines of a pair of cutout 130d as the standard. Furthermore, the end of the optical fiber 11 held in the penetration hole 21c is also positioned in high accuracy using the middle point between two central lines of a pair of circular openings 21e as a standard. Accordingly, the optical axis of each lens face 30c and the end center of the optical fiber 11 opposed thereto can be coincided in high accuracy.

Meanwhile, the bearing pressure between the cutout 130d and the round shaft 22 changes by adjusting the interval between the points P1 and P3, and the interval between the points P2 and P4. The change of bearing pressure allows to set the pull-out force of the lens plate 130 during pull-out (or pushing) from (into) the round shaft 22 to set in a predetermined value.

Furthermore, each face of the thin plate part 130a formed with each lens face 130c is positioned at the distance Δ2 (refer to Fig. 9) from each face of the abut part 130b. Therefore, the lens face peaks are no danger of interfering with the end face 21d of the ferrule 21, which results in predetermined clearance secured therebetween.

Furthermore, joining the optical connector 120 can use couplers which are the same as the couplers 41 and 42 shown in Fig. 3. If the flange parts of the couplers 41 and 42 which respectively house the optical connector 120 are closely attached, the abut parts 130b of the opposing lens plates 130 are mutually abutted. Here, each face of the thin plate part 130a formed with each lens face 130c is positioned at the distance Δ2 (refer to Fig. 9) from each face of the abut part 130b. Therefore, there is no danger of mutual interfering of the lens face peaks, which results in a predetermined clearance secured therebetween. The other structure of the second embodiment is the same as those of the embodiment mentioned above.

The present invention is not limited to the embodiments described in the specification, but includes other embodiments and modifications. This is apparent to the person skilled in this field from the embodiments and the technical concept described in this specification. For example, the optical connector according to this embodiment can combine the single mode optical fibers or the multimode optical fibers. Furthermore, the projection part does not necessarily need to be the round shaft. Furthermore, the cutout of the lens plate may have shapes other than the V shape, the U shape, and the semicircular shape, as long as a width of the cutout becomes narrower as it goes from the open end to a back side

## Claims

1. An optical element connected to a ferrule to hold an optical fiber, including:
a plurality of lenses, and at least one cutout engaging with a projection part formed on the ferrule,
**characterized in that** the lens is positioned relative to the optical fiber held in the ferrule by an engagement of the projection part and the cutout.

2. The optical element according to claim 1, **characterized in that** the cutout has a width that become narrow as it goes from an open end to a back side of the cutout.

3. The optical element according to claim 2, **characterized in that** the cutout has a U shape, when viewed in an optical axis direction of the lens.

4. The optical element according to claim 2, **characterized in that** the cutout has a semicircular shape, when viewed in an optical axis direction of the lens.

5. The optical element according to claim 1 or 2, **characterized in that** the projection part of the ferrule are two round shafts extending in parallel, the cutout has two straight lines extending in a crossing direction when viewed in an axis direction of the round shaft, in a fabricated state of the optical element to the ferrule, the two straight lines abut on circumferences of the round shaft, and extended lines of the two straight lines crosses at a position located on a line segment that connects centers of the two round shafts.

6. The optical element according to claim 5, **characterized in that** the two straight lines form an open angle of 60° ± 20°.

7. The optical element according to claim 5 or 6, **characterized in that** the cutout has a V shape, when viewed in an optical axis direction of the lens.

8. The optical element according to any one of claims 1 to 7, **characterized by** further including an abut part that abuts to the ferrule.

9. The optical element according to any one of claims 1 to 8, **characterized in that** the optical element is formed integrally by molding a glass.

10. The optical element according to any one of claims 1 to 8, **characterized in that** the optical element is formed integrally by molding a resin containing a glass fiber.

11. The optical element according to any one of claims 1 to 10, **characterized by** further including an antireflection film formed at least on the lens.

12. An optical connector **characterized by** comprising the optical element according to any one of claims 1 to 11, and a ferrule connected with the optical element.
